# EUROPEAN PATENT SPECIFICATION

(11) **EP 4 001 075 B1**
(45) Date of publication and mention of the grant of the patent: **24.07.2024**
(21) Application number: 21209824.8
(22) Date of filing: 23.11.2021
(51) Int. Cl.: B62J 9/23, B62J 9/24, B62H 5/00

(54) **BOX FOR TWO-WHEELED VEHICLES OR THE LIKE**
BOX FÜR ZWEIRÄDRIGE FAHRZEUGE ODER DERGLEICHEN
BOÎTE POUR VÉHICULES À DEUX ROUES OU SIMILAIRE

(30) Priority: 23.11.2020 IT 202000028067
(43) Date of publication of application: 25.05.2022
(73) Proprietor: Candelo, Carolina, 16122 Genova (IT); Candelo, Isabella, 16122 Genova (IT)
(72) Inventor: CANDELO, ROBERTO, 16122 GENOVA (IT)
(74) Representative: Karaghiosoff, Giorgio Alessandro

(56) References cited:
- DE-U1- 9 007 222
- JP-A- 2001 354 178
- JP-A- S5 758 568
- JP-U- 3 227 762

## Description

The present invention relates to a device for carrying a load such as a removable trunk for straddled two-wheeled vehicles.

In general, when it is necessary to transport objects on two-wheeled vehicles, which are equipped with limited transport capacities, it is desirable to integrate the vehicle with one or more devices for a load to be transported. The term 'load' is used here to mean a variety of objects which can be transported either directly or by means of a container.

In the non-limiting context of a bicycle, a load can be understood as any type of movable item (a bag, a tool, a personal item or other) to be transported or even only to be stored by means of a container which can be detachably attached to the vehicle in such a way that it is integral with it during transport.

The container can be in turn declined in various forms such as a basket, a generic closed, closable, or partially open container.

Preferably, the container is at least partially closed to protect unwanted access to the contents.

In particular, the invention relates to devices comprising:
- the features of appended claim 1.

This particular type of trunk has the advantage that it can be separated from the vehicle and used as a transport bag. However, the trunks on the market have complicated and heavy mechanisms for removable fastening to the vehicle.

This makes current trunks uncomfortable to use separately from the vehicle, due to their structural stiffness, their weight, but also the fact that they are aesthetically unattractive and unsuitable for manual transport.

Utility model patent JP3227762U, discloses the features of the preamble of claim 1, and illustrates a trolley body that can be detachably attached to the frame of a bicycle by means of a movable support that engages with a fixed base by means of a movable guiding member that engages with the movable support and guides it along an engagement stroke at the base; when engaged, a hooked member takes care of keeping the trolley body in the engagement position.

This solution has some disadvantages, in terms of implementation and operational complexity (especially with respect to the U-shaped body indicated with reference 12), of the high number of parts involved and of the coupling/uncoupling mechanism 30,31 which appears to be of non-immediate use and dangerous for potential injuries due to the protruding parts of both the base and the trolley body.

Therefore, feeling the need to further improve the current transport devices both from a structural point of view and from the point of view of the simplicity of use of the removable means of attachment to the vehicle, the applicant has improved what is already known according to the invention claimed and described below in order to introduce a device which solves the problem of simplifying the mechanisms for temporarily attaching the trunk to the vehicle, in a solution which is easy to operate (even with a single hand of a single user) and integrates in the same device the requirements of easy engagement and disengagement to the frame, protection of access to the contents, undesired removal of the device, stable fixing to the frame of the vehicle even when the latter is in motion.

Express reference is made herein to the definition of the term three-dimensional shell, both for the description and for the claims, meaning for simplicity of description and understanding, both a shell of such material that maintains a predetermined three-dimensional shape and a wrapping of floppy material, such as a fabric, a leaf, or similar that forms a pouch, a bag, a pocket that is closable and varies its shape depending on the level of filling.

In accordance with claim 1, the invention comprises at least one coupling member, preferably two or possibly more than two coupling members distributed in a predetermined pattern along an axis substantially transverse to the direction of the engagement/disengagement stroke, whereby the trunk, by means of an interlocking member, is engaged to the frame of the vehicle housing an interlocking member.

Advantageously, the invention introduces a particular locking member comprising a swinging lever which can swing about a swing axis disposed on the stationary part of the frame; the free end of said locking member , intended as the end opposed to the hinge around which the swinging lever oscillates, is conceived in such a way as to overlap and engage with the upper half-shell of the trunk in such a way as to realize the fixing of the container to the vehicle while binding at the same time the upper half-shell, which acts as a lid of the trunk , with the base of the trunk itself.

Thanks to this characteristic, the movement to be carried out in order to fix and separate the trunk to the vehicle is simplified by a minimum number of movements that are easy to carry out, both as regards the fixing of the box to the vehicle frame, and as regards the locking of the same in a stable position.

The execution embodiments may be different, depending on the aesthetic form of the trunk, the type of vehicle, the material with which the trunk is made, without departing from the scope of the appended claims.

Advantageously, the locking members can be activated or deactivated by means of a key activation/deactivation mechanism.

Among the possible embodiments for the coupling member and the interlocking member, a preferred embodiment comprise at least one coupling tooth, arranged in an horizontal or slightly inclined plane and oriented in the direction of the engagement stroke, while the interlocking member accommodates an interlocking seat comprising at least one elongated top plate, disposed transversal to the direction of the engagement/disengagement stroke and having two long peripheral edges and two short peripheral edges, said plate being supported at the short peripheral edges by two vertical supports cooperating with said interlocking teeth to prevent transversal movement of said interlocking member when in engagement position with said interlocking member .

Also in this case, the configuration and distribution of the hooks and of the corresponding and cooperating interlocking seats may be different and substantially optimised with reference to the contingent boundary conditions defined by the structure of the vehicle and/or by the aesthetic shape of the three-dimensional shell forming the trunk.

A possible embodiment is implemented in such a way that the interlocking seat is provided with end-stroke means cooperating with said interlocking members in stopping the engagement stroke and at the same time binding the coupling members with the interlocking member in a locked position wherein translations different from the movement of the disengagement stroke are prevented.

For the pure purpose of demonstrating the multiplicity and obviousness of possible embodiments, the hooks can be envisaged associated with the vehicle part and the flaps associated with the trunk.

Other possible embodiments fall within the sphere of the choices of opportunity that the man skilled in art can make, drawing on solutions known from his basic technical knowledge.

A further form of implementation, which is not limiting and can be freely combined with the other possible forms of implementation, envisages the presence of cooperating guiding and centring means which allow the trunk to be positioned in a relative tooth centring position with respect to the seat and to subsequently bring the trunk into a condition of engagement with a single guided translation.

Regarding the locking members, a preferred embodiment provides that these are constituted by a swinging lever mounted oscillating around a swing axis transversal to the direction of the engagement/disengagement stroke of, for example, the interlocking member and by the coupling member.

Said swinging lever is advantageously provided at or near the end of the coupling member, which is rearward, with reference to the direction of the engagement stroke of the interlocking member in said coupling member.

Moreover, said swinging lever is movable angularly, alternatively in a position of non-interference with the three-dimensional shell engaged on said coupling member, whereby said coupling member and said shell are movable together along the engagement/disengagement stroke of said coupling member, and in a position tilted upwards against the rear side of said three-dimensional shell, wherein it constitutes a stop to the free movement of the shell and consequently of the interlocking member in the direction of disengagement of the latter from the coupling member .

The movement of the swinging lever may be controlled by an angular velocity damping mechanism, by means of at least one slow motion device positioned in proximity of said swing axis about which said swinging lever oscillates, said control mechanism optionally comprising a further elastic member for activating said motion.

In a preferred embodiment, the swinging lever or, more generally, the locking member comprises further controlled locking members acting in the upwardly tilted position of the swinging lever and activated and deactivated simultaneously therewith, acting in the direction of the engagement stroke and cooperating with corresponding collisions in the engaging member so as to exert a calibrated and predetermined force to hold said engaging member in the engagement position with the interlocking member.

With respect to the key mechanism enabling or preventing activation/deactivation of the locking members, said mechanism for activating/deactivating the locking members and in particular the swinging lever advantageously comprises retention means of said swinging lever in the raised locking position against the rear side of the three-dimensional shell, said retention means being controllable in the activation/deactivation position by means of a key mechanism.

The key mechanism enables or disables said swinging lever retaining means to a part of the shell, said retaining means being held in the engaged position by one or more spring members and controlled by a pressure mechanism for releasing in the engaged position of said retaining means.

Other embodiments envisage that the trunk may be realized comprising a frame adapting device intended to be fixed in an adjustable and removable manner to one or more parts of the frame of said two-wheeled vehicle and comprising a support zone and one or more support and/or anchoring zones for the engagement member.

Further embodiments of the invention anticipate that said frame adaptor comprises at least one or a plurality of manually adjustable joints for swinging the support zone about one or more swing axes and/or translating along one or more translation axes in accordance with a desired orientation of the trunk when in the engaged position and/or that said frame adaptor comprises one or more clamp bodies for clamping to cylindrical parts of the frame of said two-wheeled vehicle.

Further features related to refinements or advantageous constructional choices are the subject of sub-appendations.

These and other features and advantages of the present invention will be more clearly shown by the following description of some embodiments illustrated in the accompanying drawings:
Figure 1a shows a side view of a vehicle with a trunk mounted on a rear plate according to an embodiment of the present invention.
Figure 1b shows a perspective view of an example embodiment of a trunk according to the present invention separated from the vehicle.
Figures 2a, 2b, 2c show an embodiment of the interlocking member comprising the swinging lever according to three different angular perspectives.
Figure 3 shows an enlarged view of the underside of the trunk according to a first embodiment variant wherein the coupling member is joined to the underside of the trunk.
Figures 4a and 4b show two views of the trunk subject to the same variant of figure 3 in the engaged condition with the interlocking member.
Figures 5a and 5b show, respectively, a detail view of the engagement members of the swinging lever to the upper shell of the trunk.
Figure 6 shows part of the members for engaging the swinging lever to the upper shell of the trunk in figures 5a and 5b engaged with each other.
Figure 7a shows an embodiment variant wherein there is a mount for attaching the trunk to the frame of a bicycle while Figure 7b shows a three-dimensional view of the combined trunk with interlocking members, attachment, and attachment mount.

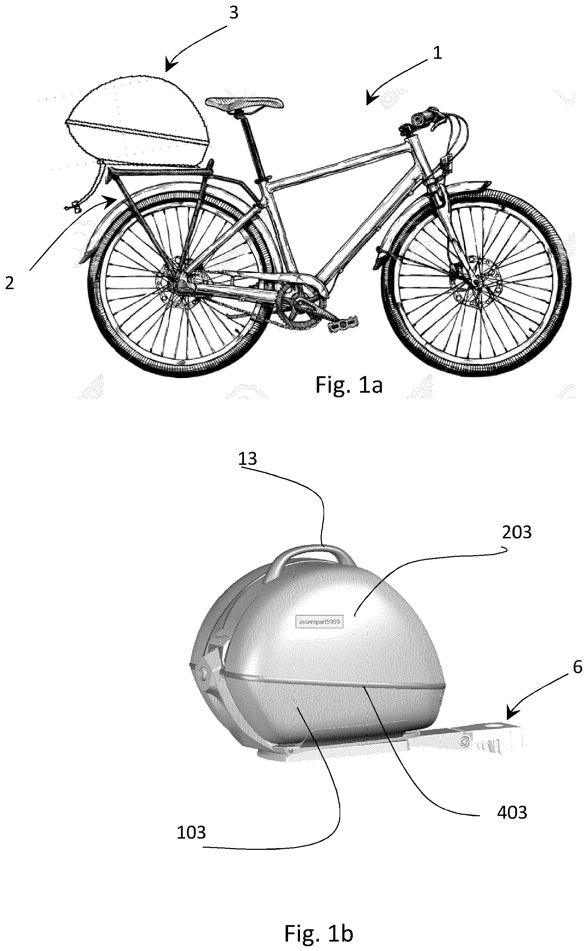

With reference to figure 1, a two-wheeled vehicle 1 has at its rear end a luggage rack bracket 2 to which a trunk 3 can be attached.

Preferably, the trunk is provided with means for transporting the trunk in a separate condition from the vehicle; in a preferred embodiment, the trunk is provided with a handle 13 positioned in the upper part of the half shell 103 which, in addition to being used for transport, may serve for opening the trunk and for engagement and/or disengagement from the vehicle.

The trunk 3 may comprise a three-dimensional shell of material that is rigid, soft, but such that it maintains a predetermined three-dimensional shape, or floppy material in the form of a leaf, sheet or similar.

In the illustrated embodiment, the three-dimensional trunk shell is divided according to a horizontal or substantially horizontal dividing line 403, i.e. also slightly inclined into two half-shells 103, 203 of which a lower half-shell 103 and an upper half-shell 203. The upper half-shell 203 is articulated to the lower half-shell by means of articulation means, such as a hinge shown or comprising a jumper of piece material with one or both half-shells. The articulation is provided along a segment of the separation line 603, shown in figure a, which is provided substantially along the front side of the trunk 3 with reference to the condition fitted to the vehicle 1. The remaining segment of the separation line 403 extends from either end of the joint line 603 of the two half shells 103, 203 to each other.

Hinging along the line of articulation 603 or along part of it is intended to open the trunk which is done by rotation between the two shells and is achieved, for example, by mechanical members such as one or more hinges arranged along the line of articulation 603.

Removable means of connection of the two half-shells 103, 203 can be provided along the separation line 403, which can be of any type.

Said means may comprise, for example, magnetic means extending along the entire separation line 403 and holding the two half-shells against each other with a force that can be overcome by manual action. Alternatively, said means may be means for interlocking the two half-shells along said separation line 403, acting along the whole said line or at one or more predetermined points, and which may have actuating members, for controlling in a condition of mutual engagement and disengagement and thus releasing or restraining the two half-shells respectively from each other and against each other.

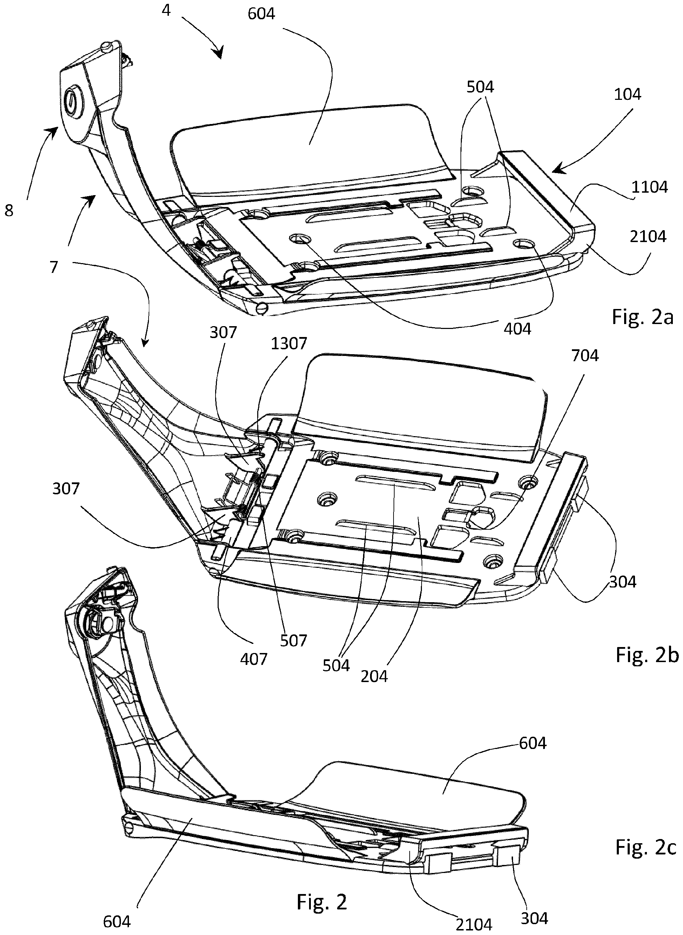

Mounting of the trunk to the vehicle bracket 2 takes place by means of an interlocking member 4, an embodiment of which is presented in Figures 2a-2c, intended to be fixed by suitable means to the vehicle bracket 2 of the vehicle 1.

The interlocking member 4 may be anchored to the bracket or carrier 2 of the frame or, when the vehicle does not have such a bracket or in any case the bracket is not suitable for the purpose, the interlocking member 4 may be anchored to the frame by means of an adapter member 6. To this end, the interlocking member 4 is provided with frame anchoring members (404) such as, for example, a plurality of holes that may be threaded to accommodate joining members to the vehicle frame such as screws and/or bolts.

The interlocking member 4 cooperates with an attachment member 5 intended to be permanently fixed to the bottom side, i.e. the bottom side of the trunk, i.e. the bottom half shell 103.

The coupling member 5, as also specified below, is designed to be brought into a position of engagement with the interlocking member (4) by means of a movement also referred to herein as an engagement stroke. At the end of the engagement stroke, the trunk (to which the coupling member is integral) is in a stable position on the frame (to which the interlocking member is integral).

Symmetrically, the release between the trunk and the vehicle comprises a disengagement stroke that releases the trunk from the vehicle allowing the user to remove the trunk, preferably carrying it by the knob 13.

In the embodiment of the preferred example, illustrated herein, the interlocking member 4 comprises a plate 204 fixable by screws to the bracket 2 of the vehicle 1 or to the adapter member 6, which plate has an interlocking seat 104 disposed in the front side of the plate itself, with reference to the trunk engagement stroke, and projecting from its upper side. The interlocking seat 104 is herein realized in the form of an elongated plate 1104, having two long peripheral edges and two short peripheral edges, arranged in a plane substantially parallel to the plane of the plate and orthogonal to the direction of advancement of the vehicle, supported at the short peripheral edges by two supports 2104. The two supports 2104 thus rigidly connect the plate to the plate 4, being able to be made of piece with the plate and/or with the plate.

The coupling member 5 also comprises a plate intended to be fixed to the bottom of the lower half shell 103. Advantageously, in order to provide greater rigidity and strength, when the material of which the lower half-shell 103 is formed is a soft or in any case relatively flexible material, even if capable of maintaining a three-dimensional shape, the plate forming the interlocking member 5 is fixed to a bottom counterplate (not illustrated) which may be provided internally to the lower half-shell 103 along the bottom side thereof or may also constitute a partial cup or partial coating of said bottom side.

In this way, the combination of plate and counterplate cooperate for stable anchorage to the bottom of the trunk, stiffening the entire structure and at the same time providing a flat or suitably shaped surface inside the container compartment that facilitates the support and maintenance in position of the objects stored therein. Optionally said counterplate may be made of two materials having different characteristics, to combine the necessary rigidity required for fixing and compatibility with the contents of the trunk. For example, the counterplate may be made of a rigid material exposed in the direction of the plate and one or more rubbery or otherwise soft materials that will not damage a helmet or other objects placed in the trunk. The claimed invention is still applicable to this alternative configuration.

The coupling member 5 carries its coupling teeth 105 in positions coinciding with those of the interlocking seat 104 located in the coupling member 4.

The positions of the teeth 105 and the interlocking seat 104 are such as to allow mutual engagement and disengagement with a single relative translational movement of the two members 4 and 5 in the direction of the longitudinal axis of the vehicle.

Moreover, unlike other known state of the art embodiments, the presence of the teeth exclusively in the front part allows an extremely fast and more precise positioning, since it can be done only in one part and according to a movement not necessarily parallel to the support plane since the rear part of the trunk can be approached also with a short rotation of the shells after the hooks have been inserted in the seat.

On the other hand, movement according to a rectilinear path is not precluded when, for example, the trunk is heavy and is first placed against the interlocking member and then subsequently pushed into engagement.

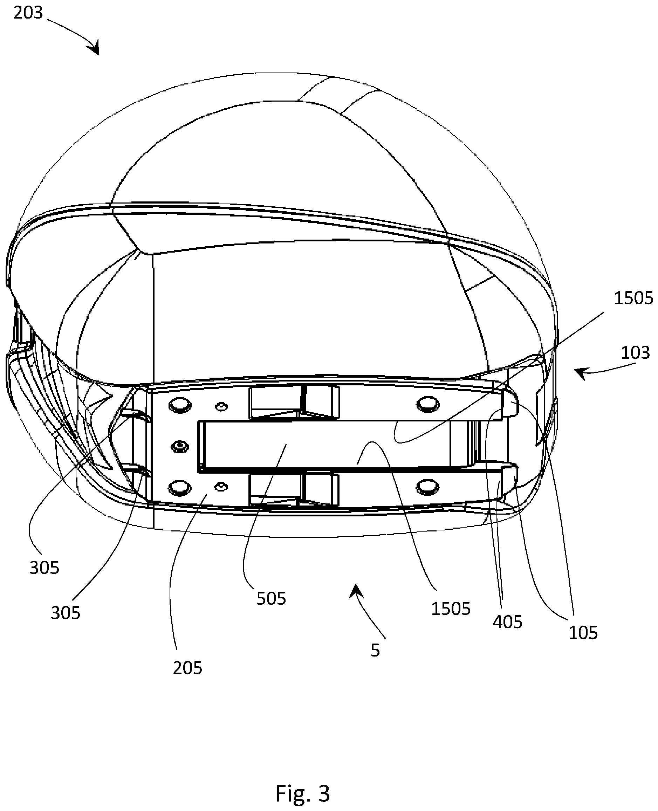

The interlocking seat 104 is also provided with end-stroke means cooperating with said coupling members in stopping the engagement stroke and simultaneously binding the coupling member to the interlocking member in a locked position wherein movements other than the movement of the disengagement stroke are prevented. In the preferred embodiment, two vertical stop plates 304 (figures 2b and 2c) are arranged in front of the interlocking member 4, which collide with as many vertical stop surfaces 405 provided in proximity to the teeth 105, slightly set back and perpendicular to them as shown in figure 3.

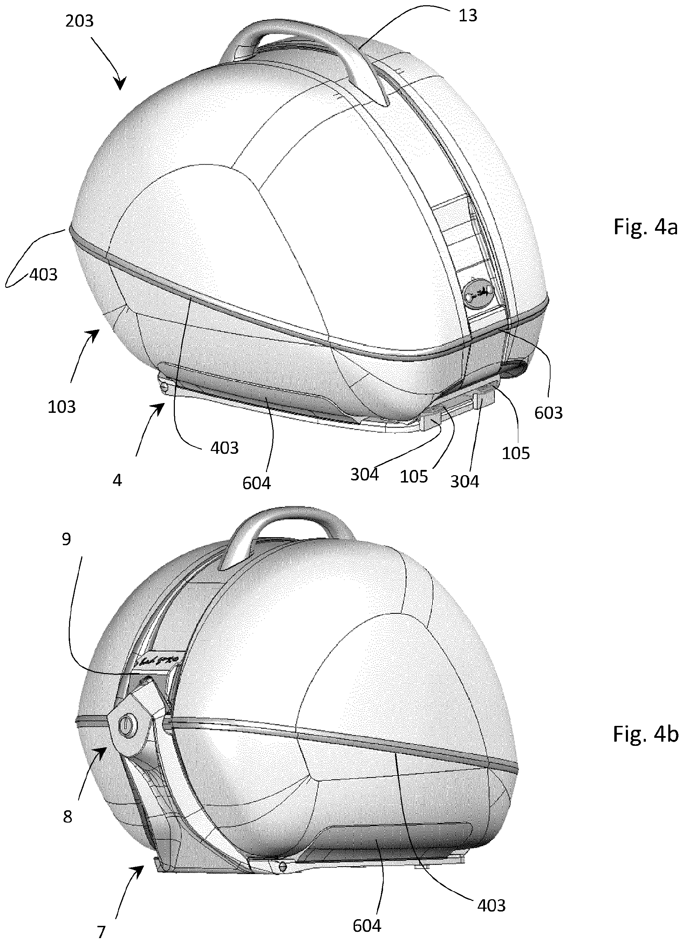

The engagement configuration can be seen in figure 4a. The reciprocal arrangement of the teeth 105 and the stop surfaces 405 provides that the latter are set back with respect to the front of the teeth along the engagement stroke. In this way, the end-stop surfaces 405 cooperate with the end-stop plates 304 by stopping the engagement stroke in a reciprocal position wherein the teeth 105 protrude slightly outside the engagement seat in favour of the retention of the trunk and of the visual and aesthetic impact, which is pleasing and provides an indication of the correct engagement of the members involved.

With reference to a further possible advantageous feature, the coupling member 4 and the interlocking member 5 have cooperating guiding and centring means that allow them to be positioned in a relative position of centring of the teeth with respect to the seat and to subsequently bring the trunk into a committed condition with a single guided translation.

Such centring and guiding means can be realized in various ways, and according to an executive variant they are constituted by rectilinear prominence 504 arranged longitudinally on the interlocking member 4.

The rectilinear prominences 504 function as guiding walls of the coupling member 5, which coupling member has a convex central band 505, of elongated shape and longitudinal arrangement, which is confined by two substantially vertical and mutually parallel perimeter walls 1505. Said perimeter walls are spaced to engage smoothly with the two rectilinear projections 504 in the guide of the engagement member 5 when superimposed on the interlocking member 4.

This prevents relative positioning that is not centred with reference to the direction transverse to the longitudinal axis of the vehicle and thus to the direction of the engagement and disengagement stroke of the teeth 105 in the seat 104.

In an implementation variant that is not exclusive but can be combined with other embodiments, the invention comprises accompanying, centring and stabilising devices in the engaged position that also act on part of the shell in addition to or as an alternative to the centring and guiding means set out above.

The need for this variant arises from the necessity to support the coupling operations starting from a relatively greater distance compared to the previous case, and furthermore from the need to offer an aid for holding in position that also acts on part of the trunk, in particular in the lower half shell 103, offering stability advantages that are even more evident when the trunk is made of semi-rigid or flexible material and therefore easily deformable.

In the preferred embodiment, the invention comprises two side fins 604 disposed in a longitudinal direction and departing from the sides of the plate 204.

Transversely, the side fins 604 have an upwardly convex cross-section, with convexity substantially equal to that present in the surface of the lower half-shell 103 with which the fins 604 cooperate in driving in the engaged position and to which lower half-shell said fins provide support to bear the weight of the load of the trunk by limiting deformation of the half-shell 103 and thus of the trunk in general.

At the rear side of the plate forming the coupling member 4, a swinging lever 7 is oscillatingly articulated around it. Said lever oscillates about a swing axis perpendicular to the engagement/disengagement path and consequently perpendicular to the longitudinal axis of the vehicle.

This swinging lever carries at its free end a lock mechanism 8 which will be described in more detail below.

In all embodiments, the swinging lever 7 is provided in such a position and with such a shape and such dimensions, so that in the downwardly tilted condition it does not interfere with the three-dimensional shell and the coupling plate 5 which is therefore free to move up and back in the direction of the disengagement stroke from the coupling member 4, making it possible to detach the trunk from the vehicle.

In the upward tilted position, the swinging lever 7 constitutes a retaining stop at least of the lower half shell 103 in the condition of engagement of the coupling member 5 in the coupling member 4, thus preventing the execution of the mutual disengagement stroke of said two members from each other and therefore the detachment of the trunk from the vehicle 1.

The swinging lever 7 is preferably, but not necessarily, associated with an oscillatory motion control mechanism which, advantageously, acts to give uniformity to the movement of the swinging lever itself. This control is more evident in the opening phase where, in most cases, the user does not drive the swinging lever but leaves it free to open under the action of gravity. In this situation, the control mechanism acts by making the opening movement of the swinging lever more uniform and, in particular, the angular speed, avoiding damage and/or rebounds at the end of the swinging lever stroke and, at the same time, making the opening smoother and more pleasant.

As shown in the drawings, the damping effect is obtained by the combination of a damping member 407 and an elastic member 507.

The damping member 407 is arranged coaxially to the swing axis of the swinging lever 7, it acts according to known techniques such as, for example, dynamic friction between mechanical parts or by fluid-dynamic or magnetic action opposing a force that increases with increasing speed.

The spring member 507 consists of a helical spring pre-calibrated to act in the opening direction of the swinging lever and only for the first part of the stroke. In this way, with a simple and inexpensive device, it is possible to obtain the effect of greater acceleration limited to the first part of the stroke and consequently to reach more rapidly the phase at constant speed wherein the action of the spring is cancelled and the damping member is fully operative.

As will be seen later, the spring 507's opening thrust action also favours the stationing of the swinging lever in the engaged position, by virtue of the force that is transferred to the retaining hook 408 increasing its traction on the retaining cylinder 509. Advantageously, this prevents unwanted opening of the mechanism when subjected to shocks and/or vibrations received by the frame when the vehicle is moving on rough roads or in abnormal situations such as a fall.

An activation/deactivation mechanism 8 is associated with the swinging lever 7, which allows the said lever to be retained in the raised condition of locking the trunk in the condition of engagement of the coupling member 5 in the interlocking member 4. Such activation and deactivation mechanisms of the swinging lever can advantageously be controlled by a key lock such as indicated by 18 and can be multiple and simultaneously activated with each other.

The swinging lever 7 may contextually have the function of holding the two half-shells 103, 203 in the closed condition of the trunk, or also provide protection against unwanted opening of the trunk by protecting the devices that allow separation between the two half-shells 103 and 203. In the specific case where the two half-shells are equipped with a zip, the swinging lever 7 in the raised locking condition can operate in a locked position against sliding in the opening direction of the two zip sliders.

In the free end part of the swinging lever 7 are located a first part of the members 8 which are part of the activation/deactivation mechanism, which, as anticipated, may comprise a key lock to allow or prevent opening by the user.

A second and remaining part of the members 9 constituting the activation/deactivation mechanism is located on the surface of the trunk in a position to face and interact with said first part of members 8 when the swinging lever 7 is in the retaining position.

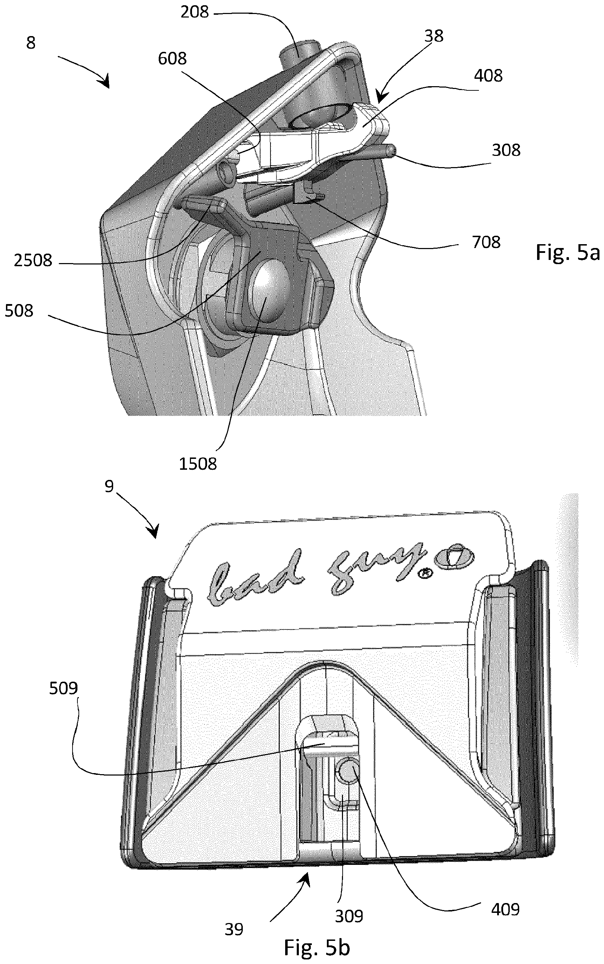

Figures 5a and 5b show, respectively, the components located at the end of the swinging lever 7 and of the trunk according to the embodiment presented herein, which is preferred but not limiting to the invention.

In particular, in figure 5a it can be observed the tab 508 which is integral with the pin 1508 and both rotate coaxially to said pin 1508 under the action and consent of the key lock 18.

The tang 508 is further provided with an appendage 2508, which guides and controls the retaining hook 408 and prevents it from moving or not.

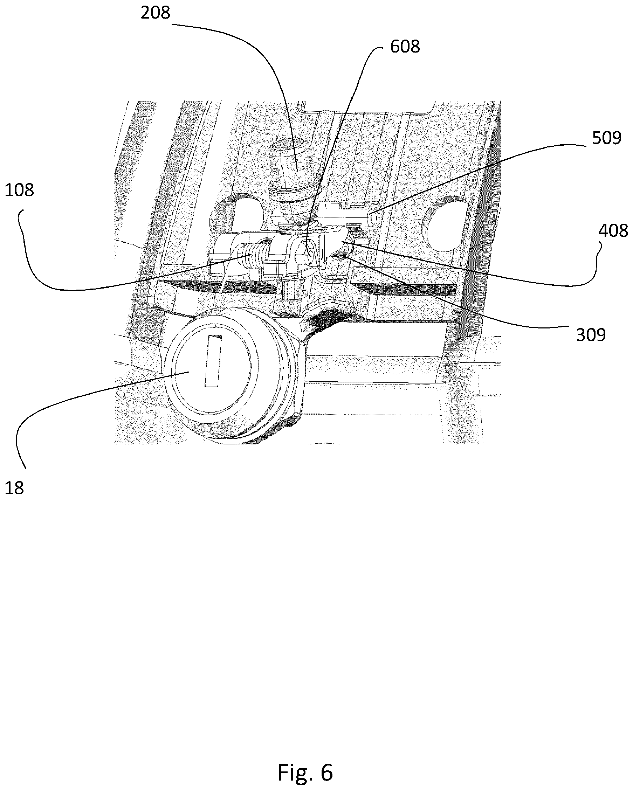

The retaining hook 408 is oscillatingly mounted on a cylindrical support 608, which support 608 also acts as a pivot-guide for a helical spring 108 (figure 6) whose elastic force acts on the hook 408 forcing it into a raised position.

In figure 5a, the tang 508 is shown in the unlocked condition and the appendage 2508 does not interfere with the retaining hook 408. In such a condition, pressing the button 208 by a user results in a force opposing the elastic force of the spring 108 and, depending on its intensity, in rotation of the hook 408 around the pin 608 resulting in downward displacement of the unrestrained end of the hook itself.

Rotation of the hook 408 leads to release from the pin 509 and consequently to release of the swinging lever 7 from the three-dimensional shell of the trunk, with the swinging lever free to swing and move into the open position.

Conversely, when the key lock is in the lock activation position, the tang 508 is rotated such that the appendage 1508 is in contact with the hook 408 and exerts an upward force on it such that the above-described movement of release as a result of pressing the button 508 is prevented. The hook end is then engaged with the pin 509 and the trunk is engaged to the interlocking member, i.e., the vehicle.

In an embodiment, the mutual engagement means between the swinging lever 7 and the trunk comprise a retractable member, also activated by the key mechanism by means of the appendage 1508 of the tang 508, articulated to make an excursion in the direction of the half shell and engage a corresponding locking seat 39. Advantageously, the engagement of said retractable member in the seat increases the locking power between the swinging lever and the trunk, in addition to what is already offered by the hook 408. In a preferred embodiment, the retractable member comprises a rod 308, cylindrical in shape, disposed on the swinging lever 7 and oriented in a direction substantially tangential to the oscillatory path of said locking member around said swing axis, said rod 308 being intended to be received by a slotted body 309 positioned on the half-shell 203 of the trunk in a plane orthogonal to said rod when the condition of engagement of the mutual engagement means occurs.

The slotted body 309 has a coupling opening 409 having a shape and size substantially equal to the cylindrical sectional shape of the rod 308.

The combined action of the pin and the slot has the advantageous effect of centring the engagement body and, when engaged, limiting the reciprocal movement of the swinging lever end by preventing misalignment or undesirable movement.

When not engaged to the trunk, the swinging lever 7 can be retracted to the closed position by placing the free end interlocked with the plate 204, which plate 204 comprises an opening and a resting engagement member 704 arranged to be engaged with the hook 408 of the swinging lever 7. This makes it safer to drive the vehicle without a trunk and prevents damage due to free swinging of the lever subject to the vibrations and shocks of vehicle movement.

The engagement position is shown in figure 6, where some components have been omitted to facilitate the representation of the engagement state. In this figure, in addition to the release button 208 and part of the lock 18, the hook 408 cooperating with the pin 509 is shown, where the hook is supported by a helical spring 108 to hold the hook in a raised position and facilitate the engagement operation. As described, the force of the spring is counteracted by any pressure exerted on the button when it is intended to disengage the trunk, and downward movement of the hook 408 is permitted or not permitted depending on the position of the lock and tang 508.

Figures 5a and 5b further show a further hooked body 708 provided for engagement in a corresponding engagement seat disposed on the upper half shell 203 of the trunk. In this embodiment, the hooked body 708 is made of piece with the rod 308, translates integral with it under the action of the tang 508 and introduces a further locking action for maintaining the swinging lever in a engaged state. The body protrudes at the bottom of the hook and is arranged to interact directly with the appendage 1508 so as to translate towards the trunk when actuated by the rotational motion of the appendage itself.

The swinging lever 7 may have corresponding engagement members of the slider(s) of the zip(s) connecting the two half-shells 103, 203 to each other and in particular of the gripping tabs of the zip sliders.

A further characterising aspect of the present invention is related to the presence, in an executive and non-limiting form, of further controlled locking members which act when the swinging lever 7 is in the upward tilted position and are activated and deactivated simultaneously with the movement of the swinging lever during displacement towards the locking position (upward tilted position) and during displacement towards the position of non-interference with the shell, respectively.

In the preferred embodiment, two projections 307 (figure 2) are provided at the base of the swinging lever 7 according to an arrangement in two planes orthogonal to the swing axis of the swinging lever and are inserted in corresponding grooves 305 obtained in the rear part of the base of the lower half shell 103, preferably in the coupling member 5. The two projections are substantially flat in shape, parallel to each other and spaced apart by a predetermined distance which may vary according to the embodiments, just as the number of said projections 307 integrated in the swinging lever 7 may freely vary without prejudice to the scope of the invention.

In the non-interference position, none of the parts of the swinging lever 7 acts as a retaining member between the hooking member 5 and the interlocking member 4. On the other hand, moving the swinging lever upwards causes the projections 307 to move progressively towards the inside of the interlocking member (4) and thus, in the case where the trunk is engaged, towards the grooves 305.

The dimensioning of the projections 307 and the grooves 305 is such that, during insertion, a force is generated in the direction of the engagement stroke between the plates, which contributes to reaching the stop position of the hooking teeth 105 in the seat 104.

In addition, once said stop position is reached, the hooks exert a second calibrated and predetermined force to hold said coupling member 5 in the engagement position with the interlocking member 4.

Advantageously, the flat conformation of the projections 307 has two faces that cooperate with similar surfaces present in the grooves 305 and prevent the trunk from translating horizontally along an axis transverse to the engagement/disengagement stroke.

Optionally, the projections 307 may have an appendage 1307 which, when engaged with the trunk, engages corresponding indentations created in the grooves 305 so as to constitute an impediment to movement of the engagement member, i.e., the trunk, along a direction orthogonal to the engagement member 4 i.e., along an upward or downward direction.

The point form and/or the number of projections 307 and relative grooves 305 is not binding on the scope of the invention, which invention is generally characterised in this embodiment by a locking and positioning member acting in the part opposite the hooking teeth along the engagement/disengagement stroke and acting contextually to the closing movement of the swinging lever without interfering when the swinging lever is in the open position.

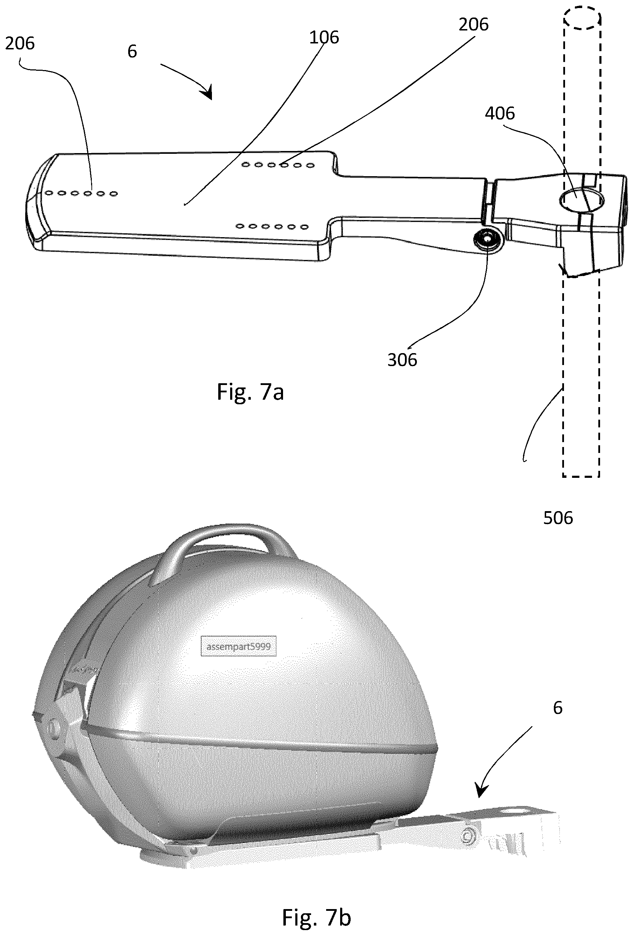

Other embodiments of the invention are directed to the application of the invention on vehicles with a frame not arranged to support the interlocking member 4, such as a bicycle without a luggage rack. In this context, the invention can be declined in an embodiment comprising a frame adapting device 6 intended to be fixed in an adjustable and removable manner to one or more parts of the frame of said two-wheeled vehicle. Figure 7a shows a possible implementation form of an adaptation device as an object of the invention, comprising a support zone 106 and one or more support and/or anchoring zones 206 mirroring the anchoring members 404 present in the interlocking member 4.

By means of 506, it was intended to represent a cylindrical part of a bicycle frame such as a seat tube or a seat post. By means of one or more clamp bodies 406, which can be tightened, for example, by one or more bolts or lever pins, the device 6 is installed solidly to the frame of the bicycle and by means of the joint 306 it is possible to compensate the vertical inclination of the part of the frame on which the device 6 is tightened, orienting the flat body of the device 106 horizontally to allow the best positioning of the interlocking member and therefore of the trunk once engaged.

The embodiments shown are not unique, and the engineer in the art could, based on shared knowledge, vary the number and shape of the frame attachment points without departing from the scope of the the appended claims.

The subject matter of the invention is susceptible to numerous modifications and variations, all within the scope of the appended claims. All the materials may be different according to requirements, without going beyond the scope of protection as set out in the appended claims.

Although the object has been described with particular reference to the appended figures, the reference numbers used in the description and claims are used to improve the intelligence of the invention and do not constitute any limitation to the claimed scope of protection.

## Claims

1. Device for containing objects (3) for straddled two-wheeled vehicles such as a bicycle, a motorbike comprising:
- a trunk comprising a three-dimensional shell preferably made at least in part of at least one soft and flexible material closed on itself, which delimits a housing compartment and is formed by two shell parts (103, 203) mutually complementing each other in forming said three-dimensional shell, wherein said at least two shell parts are separated from each other by a separation line (403) extending from one end to the other end of a reciprocal hinging section (603) of said two shell parts , in such a way that said two shell parts (103, 203) can be moved away from each other and approached to each other respectively in an open position of said three-dimensional shell or in a closed position of said three-dimensional shell, and being provided means for removably retaining said two shell parts to each other in said closed position of said three-dimensional shell;
- removable attaching means of said three-dimensional shell to a structural part (2) of a straddled two-wheeled vehicle, wherein said means comprise at least an interlocking member (4) intended to be permanently fixed to said structural part (2), of a straddled two-wheeled vehicle and a coupling member (5) which is bound to one of said two shell parts (103, 203) and which is engageable and disengageable from said interlocking member (4) by relative movement along an engagement/disengagement stroke according to a predetermined path, there being provided a second locking member for locking said coupling member (5) with said interlocking member (4) in an engaged position, said second locking member comprising a swinging lever (7) mounted swinging to the interlocking member (4) and swinging about a swing axis oriented transversely to the direction of said engagement/disengagement stroke, said swinging lever (7) being located at or near the rear end of said interlocking member (4), with reference to the direction of the engagement stroke of said coupling member (5) in said interlocking member (4), said swinging lever (7) being angularly movable, alternatively
- in a position of non-interference with the three-dimensional shell (103, 203) when engaged with the interlocking member (4), whereby said coupling member (5) and, therefore, said shell (103, 203) are movable together on the interlocking member (4) along the engagement/disengagement stroke or
- in an interference position with the three-dimensional shell (103, 203), wherein the swinging lever (7) is tilted upwards against the rear side of said three-dimensional shell, wherein said interference position said swinging lever (7) constitutes a stop to the free displacement of said three-dimensional shell and consequently of said coupling member (5) in the direction of disengagement from said interlocking member (4),
wherein the coupling member (5), integral with one of the two shell parts (103, 203), comprises at least one further second coupling member (105), preferably two or possibly more than two further second coupling members (105) distributed according to a predetermined design along an axis substantially transverse to the direction of the engagement/disengagement stroke, positioned in the front part of the coupling member (5), while the interlocking member (4) is provided with an interlocking seat (104) suitable to cooperate with said further second coupling members (105) and positioned in the front part of the interlocking member (4), said interlocking seat (104) being engaged and disengaged by said further second coupling members (105) by means of a translation in a substantially horizontal or slightly inclined plane,
**characterised in that** when said swinging lever (7) is in said interference position with said three-dimensional shell (103, 203) which is installed on the interlocking member (4), the swinging lever (7) extends to overlap at least partially and to engage and lock with the part of said shell (103, 203) not directly connected to said coupling member (5).

2. Device according to claim 1 wherein the interlocking seat (104) is provided with end-of-stroke means (304) cooperating with said coupling members (105) for stopping the engagement stroke and binding the engaging member with the interlocking member in a locked position wherein movements other than the movement of the disengagement stroke are prevented.

3. Device according to claim 1 or 2 wherein the interlocking member (4) and the coupling member (5) are provided with cooperating guiding means (604) in a position of mutual centring and relative sliding in said engagement/disengagement direction between the interlocking member (4) and the coupling member (5).

4. Device according to one or more of the preceding claims wherein said further second coupling members comprise at least one engagement tooth, disposed in a horizontal or slightly inclined plane and oriented in the direction of the engagement stroke, while the engagement seat (104) comprise at least one elongated top plate (1104), disposed transversal to the direction of the engagement/disengagement stroke and having two long peripheral edges and two short peripheral edges, said plate (1104) being supported at its short peripheral edges by two vertical supports (2104) cooperating with said engagement tooth or teeth to prevent transverse movement of said coupling member (5) when in engagement position with said interlocking member (4).

5. Device according to one or more of the preceding claims, wherein the said further second coupling members for locking the coupling member (5) with the interlocking member (4) comprise further driven locking members (307) acting in said upward tilted position of the locking member and activating and deactivating simultaneously therewith, acting in the direction of the engagement stroke and cooperating with corresponding grooves (305) cut in the coupling member (5) in such a way as to exert a calibrated and predetermined holding force on said coupling member (5) in the engaged position with the interlocking member (4), preventing at least the longitudinal, transversal translation of said coupling member (5) with respect to said interlocking member (4).

6. Device according to one or more of the preceding claims, wherein said swinging lever (7) comprises an oscillatory motion control mechanism, preferably in the form of an angular velocity damping mechanism by means of at least one movement retarder (407) positioned in proximity to said swing axis around which said swinging lever (7) oscillates, said oscillatory motion control mechanism optionally comprising a further elastic activation member (507) of said oscillatory motion.

7. Device according to one or more of the preceding claims, **characterised in that** the locking means are activated or deactivated by an activation/deactivation mechanism (8, 9) comprising a key lock (18) intended to cooperate with a locking seat (39).

8. Device according to claim 7, wherein said activation/deactivation mechanism (8, 9) comprises retaining means (408, 509) of said locking member in the interference position against the rear side of the three-dimensional shell, which retaining means (408, 409) are operable in the activation and/or deactivation position by means of a pressure mechanism (208) whose operability is constrained by said key lock (18).

9. Device according to one or more of the preceding claims **characterised in that** at least the part of the shell (203) that does not bear the coupling member (5) and the swinging lever accommodate said activation/deactivation mechanism (8, 9).

10. Device according to one or more of claims from 7 to 9 wherein said (activation/deactivation) mechanism (8, 9) is maintained in the engaged position by one or more elastic members (108) controlled by a pressure mechanism (208) for unlocking in the engaged position of said activation/deactivation mechanism (8, 9).

11. Device according to one or more of the preceding claims from 7 to 10 wherein the activation/deactivation mechanism (8, 9) comprises a rod (308), preferably cylindrical in shape, arranged on the swinging lever (7)and oriented along a direction substantially tangential to the oscillatory path of said swinging lever (7)around said swing axis, said rod (308) intended to be received by a slotted body (309) positioned on a half-shell (203) of said trunk in a plane orthogonal to said rod when the engagement condition of said activation/deactivation mechanism (8, 9) occurs, said slotted body (309) comprising a coupling opening (409) having a shape and size substantially equal to the cylindrical sectional shape of said rod (308) so as to receive said rod (308).

12. Device according to one or more of the preceding claims from 7 to 11 wherein the activation/deactivation mechanism (8, 9) comprises a hooked member (708) disposed on the swinging lever (7) and provided for engagement in a corresponding engagement seat disposed on the upper half-shell (203) of the trunk, said hooked member (708) cooperating with an appendage (1508) of the activation/deactivation member for translation into position of at least one of said holding members (308) .

13. Device according to one or more of the preceding claims, wherein the two shell parts (103, 203) are connectable to each other along the separation line (403) by means of a zip, comprising at least one tab and at least one slider, said zip being provided in such a way that in the closed condition said tab and said slider are provided to be placed close to the free end (8) of the locking device, which, in the engaged position, together with a portion of the shell, defines a closed area to protect access and actuation of said tab and slider by an operator.

14. Device according to one or more of the preceding claims, **characterised in that** the coupling member (5) comprises a coupling plate (205) having the one or more coupling teeth (105) protruding from its front profile with respect to the engagement stroke in said interlocking member (4), which engagement plate (205) further has one, preferably two or alternatively more than two grooves (305) in proximity to its rear profile with respect to the engagement stroke in said interlocking member (4), and which engagement plate (205) is fixable to the wall of one of said two shell parts (103).

15. Device according to one or more of the preceding claims, **characterized in that** said interlocking member (4) comprises an interlocking plate (204) housing said upper plate (1104) and said vertical supports in the front area with respect to the engagement stroke by said coupling member (5), said plate (204) being further connected, at its rear end, with said swinging lever (7) which is mounted by hinging in an oscillating manner about a swing axis transverse to the engagement stroke, said interlocking plate being provided with anchoring members to the frame (404) of said two-wheeled vehicle.

16. Device according to one or more of the preceding claims **characterised by** comprising a frame adapting device (6) intended to be fixed in an adjustable and removable manner to one or more parts of the frame of said two-wheeled vehicle and comprising a support zone (106) and one or more support and/or anchoring areas (206) to said anchoring members (404) constituted in said interlocking member (4).

17. Device according to claim 16 wherein said frame adapting device comprises at least one or a plurality of manually adjustable joints (306) for swinging the support zone about one or more swing axes and/or translating along one or more translation axes in accordance with the desired orientation of the trunk when in the engaged position.

18. Device according to claim from 16 or 17 wherein said frame adapting device (6) is made of piece with one or more of said interlocking members (4) preferably and not limitedly with said interlocking plate (204).

19. Device according to one or more of the preceding claims from 16 to 18 wherein said adapting device (6) comprises one or more clamp bodies (406) for clamping to cylindrical parts of the frame (2) of said two-wheeled vehicle (1).

## Patentansprüche

1. Vorrichtung zum Aufbewahren von Gegenständen (3) für Grätschsitz-Zweiradfahrzeuge, wie ein Fahrrad, ein Motorrad, umfassend:
- einen Koffer, der eine in sich geschlossene und vorzugsweise zumindest teilweise aus mindestens einem weichen und flexiblen Material hergestellte dreidimensionale Schale umfasst, die einen Aufnahmeraum begrenzt und durch zwei sich unter Bildung der dreidimensionalen Schale gegenseitig ergänzende Schalenteile (103, 203) gebildet wird, wobei die mindestens zwei Schalenteile durch eine Trennlinie (403) voneinander getrennt sind, die sich von einem Ende zum anderen Ende eines die beiden Schalenteile gelenkig miteinander verbindenden Scharnierabschnitts (603) derart erstreckt, dass die beiden Schalenteile (103, 203) in einer offenen Stellung der dreidimensionalen Schale oder in einer geschlossenen Stellung der dreidimensionalen Schale jeweils voneinander wegbewegt und einander angenähert werden können, und wobei Mittel zum lösbaren Festhalten der beiden Schalenteile aneinander in der geschlossenen Stellung der dreidimensionalen Schale vorgesehen sind,
- lösbare Befestigungsmittel der dreidimensionalen Schale an einem Strukturteil (2) eines Grätschsitz-Zweiradfahrzeugs, wobei die Mittel mindestens ein zur dauerhaften Befestigung an dem Strukturteil (2) eines Grätschsitz-Zweiradfahrzeugs bestimmtes Verriegelungselement (4) und ein Kopplungselement (5) umfassen, das mit einem der beiden Schalenteile (103, 203) gebunden ist und das durch eine Relativbewegung entlang eines Eingriffs- /Freigabehubes gemäß einem vorbestimmten Weg mit dem Verriegelungselement (4) in Eingriff und außer Eingriff gebracht werden kann, wobei ein zweites Verriegelungselement zum Verriegeln des Kupplungselements (5) mit dem Verriegelungselement (4) in einer Eingriffsposition vorgesehen ist, wobei das zweite Verriegelungselement einen Schwenkhebel (7) umfasst, der schwenkbar an dem Verriegelungselement (4) angebracht ist und um eine quer zur Richtung des Eingriffs-/Freigabehubs ausgerichtete Schwenkachse schwenkt, wobei der Schwenkhebel (7) am oder in der Nähe des hinteren Endes des Verriegelungselements (4) in Bezug auf die Richtung des Eingriffshubs des Kupplungselements (5) in dem Verriegelungselement (4) angeordnet ist, wobei der Schwenkhebel (7) wechselweise winkelbeweglich ist:
- in einer Nicht-Interferenzposition mit der dreidimensionalen Schale (103, 203), wenn er mit dem Verriegelungselement (4) in Eingriff steht, wobei das Kupplungselement (5) und daher die Schale (103, 203) zusammen auf dem Verriegelungselement (4) entlang des Eingriffs-/Freigabehubs beweglich sind oder
- in einer Interferenzposition mit der dreidimensionalen Schale (103, 203), wobei der Schwenkhebel (7) nach oben gegen die Rückseite der dreidimensionalen Schale gekippt ist, wobei die Interferenzposition des Schwenkhebels (7) einen Anschlag für die freie Verschiebung der dreidimensionalen Schale und folglich des Kupplungselements (5) in der Richtung des Lösens von dem Verriegelungselement (4) darstellt,
wobei das mit einem der beiden Schalenteile (103, 203) einstückige Kupplungselement (5) mindestens ein weiteres zweites Kupplungselement (105), vorzugsweise zwei oder möglicherweise mehr als zwei weitere zweite Kupplungselemente (105), umfasst, die gemäß einem vorbestimmten Design entlang einer Achse im Wesentlichen quer zur Richtung des Eingriffs-/Freigabehubs verteilt und im vorderen Teil des Kupplungselements (5) positioniert sind, während das Verriegelungselement (4) mit einem Verriegelungssitz (104) versehen ist, der zum Zusammenwirken mit den weiteren zweiten Kopplungselementen (105) geeignet und im vorderen Teil des Verriegelungselements (4) angeordnet ist, wobei der Verriegelungssitz (104) durch die weiteren zweiten Kopplungselemente (105) mittels einer Verschiebung in einer im Wesentlichen horizontalen oder leicht geneigten Ebene in Eingriff und außer Eingriff gebracht wird,
**dadurch gekennzeichnet, dass**
wenn sich der Schwenkhebel (7) in der Interferenzposition mit der auf dem Verriegelungselement (4) installierten dreidimensionalen Schale (103, 203) befindet, der Schwenkhebel (7) sich so erstreckt, dass er zumindest teilweise den nicht direkt mit dem Kupplungselement (5) verbundenen Teil der Schale (103, 203) überlappt und mit diesem in Eingriff kommt und verriegelt.

2. Vorrichtung nach Anspruch 1, wobei der Verriegelungssitz (104) mit Endanschlagmitteln (304) versehen ist, die mit den Kupplungselementen (105) zusammenwirken, um den Eingriffshub zu stoppen und das Eingriffselement mit dem Verriegelungselement in einer verriegelten Position zu verbinden, wobei andere Bewegungen als die Bewegung des Freigabehubs verhindert werden.

3. Vorrichtung nach Anspruch 1 oder 2, wobei das Verriegelungselement (4) und das Kupplungselement (5) mit zusammenwirkenden Führungsmitteln (604) in einer Position der gegenseitigen Zentrierung und des relativen Gleitens in der Eingriffs- /Freigaberichtung zwischen dem Verriegelungselement (4) und dem Kupplungselement (5) versehen sind.

4. Vorrichtung nach einem oder mehreren der vorhergehenden Ansprüche, wobei die weiteren zweiten Kupplungselemente mindestens einen Eingriffszahn umfassen, der in einer horizontalen oder leicht geneigten Ebene angeordnet und in Richtung des Eingriffshubs ausgerichtet ist, während der Eingriffssitz (104) mindestens eine längliche Oberplatte (1104) umfasst, die quer zur Richtung des Eingriffs-/Freigabehubs angeordnet ist und zwei lange Umfangsränder und zwei kurze Umfangsränder aufweist, wobei die Platte (1104) an ihren kurzen Umfangsrändern von zwei vertikalen Halterungen (2104) getragen wird, die mit dem Eingriffszahn oder den Eingriffszähnen zusammenwirken, um eine Querbewegung des Kupplungselements (5) zu verhindern, wenn es sich in Eingriffsposition mit dem Verriegelungselement (4) befindet.

5. Vorrichtung nach einem oder mehreren der vorhergehenden Ansprüche, wobei die weiteren zweiten Kupplungselemente zum Verriegeln des Kupplungselements (5) mit dem Verriegelungselement (4) weitere angetriebene Verriegelungselemente (307) umfassen, die in der nach oben gekippten Position des Verriegelungselements wirken und sich mit diesem gleichzeitig aktivieren und deaktivieren, wobei sie in Richtung des Eingriffshubs wirken und mit entsprechenden in das Kupplungselement (5) geschnittenen Nuten (305) derart zusammenwirken, dass eine kalibrierte und vorbestimmte Haltekraft auf das Kupplungselement (5) in der Eingriffsposition mit dem Verriegelungselement (4) ausgeübt wird, die zumindest die Längs- und Querverschiebung des Kupplungselements (5) in Bezug auf das Verriegelungselement (4) verhindert.

6. Vorrichtung nach einem oder mehreren der vorhergehenden Ansprüche, wobei der Schwenkhebel (7) einen Schwingungsbewegungssteuerungsmechanismus umfasst, vorzugsweise in Form eines Winkelgeschwindigkeitsdämpfungsmechanismus mittels mindestens eines Bewegungsverzögerers (407), der in der Nähe der Schwenkachse angeordnet ist, um die der Schwenkhebel (7) schwingt, wobei der Schwingungsbewegungssteuerungsmechanismus optional ein weiteres elastisches Aktivierungselement (507) der Schwingungsbewegung umfasst.

7. Vorrichtung nach einem oder mehreren der vorhergehenden Ansprüche, **dadurch gekennzeichnet, dass** die Verriegelungsmittel durch einen Aktivierungs-/Deaktivierungsmechanismus (8, 9) aktiviert oder deaktiviert werden, der ein Schlüsselschloss (18) umfasst, das dazu bestimmt ist, mit einem Verriegelungssitz (39) zusammenzuwirken.

8. Vorrichtung nach Anspruch 7, wobei der Aktivierungs-/Deaktivierungsmechanismus (8, 9) Rückhaltemittel (408, 509) des Verriegelungselements in der Interferenzposition gegen die Rückseite der dreidimensionalen Schale umfasst, wobei die Rückhaltemittel (408, 409) in der Aktivierungs- und/oder Deaktivierungsposition mittels eines Druckmechanismus (208) betätigt werden können, dessen Funktionsfähigkeit an das Schlüsselschloss (18) gebunden ist.

9. Vorrichtung nach einem oder mehreren der vorhergehenden Ansprüche, **dadurch gekennzeichnet, dass** zumindest der Teil der Schale (203), der nicht das Kupplungselement (5) und den Schwenkhebel trägt, den Aktivierungs/Deaktivierungsmechanismus (8, 9) aufnimmt.

10. Vorrichtung nach einem oder mehreren der Ansprüche 7 bis 9, wobei der (Aktivierungs-/Deaktivierungs-)Mechanismus (8, 9) in der Eingriffsstellung durch ein oder mehrere elastische Elemente (108) gehalten wird, die durch einen Druckmechanismus (208) zum Entriegeln des Aktivierungs-/Deaktivierungsmechanismus (8, 9) in der Eingriffsstellung gesteuert werden.

11. Vorrichtung nach einem oder mehreren der vorhergehenden Ansprüche 7 bis 10, wobei der Aktivierungs-/Deaktivierungsmechanismus (8, 9) eine vorzugsweise zylinderförmige Stange (308) umfasst, die auf dem Schwenkhebel (7) angeordnet und entlang einer Richtung ausgerichtet ist, die im Wesentlichen tangential zum Schwingungsweg des Schwenkhebels (7) um die Schwenkachse verläuft, wobei die Stange (308) dazu bestimmt ist, von einem geschlitzten Körper (309) aufgenommen zu werden, der auf einer Halbschale (203) des Koffers in einer Ebene orthogonal zu der Stange positioniert ist, wenn der Eingriffszustand des Aktivierungs-/Deaktivierungsmechanismus (8, 9) vorliegt, wobei der geschlitzte Körper (309) eine Kupplungsöffnung (409) umfasst, die eine Form und Größe aufweist, die im Wesentlichen gleich der zylindrischen Querschnittsform der Stange (308) ist, um die Stange (308) aufzunehmen.

12. Vorrichtung nach einem oder mehreren der vorhergehenden Ansprüche 7 bis 11, wobei der Aktivierungs-/Deaktivierungsmechanismus (8, 9) ein hakenförmiges Element (708) umfasst, das an dem Schwenkhebel (7) angeordnet und zum Eingriff in einen an der oberen Halbschale (203) des Koffers angeordneten entsprechenden Eingriffssitz vorgesehen ist, wobei das hakenförmige Element (708) mit einem Ansatz (1508) des Aktivierungs- /Deaktivierungselements zur Verschiebung in Position von mindestens einem der Halteelemente (308) zusammenwirkt.

13. Vorrichtung nach einem oder mehreren der vorhergehenden Ansprüche, wobei die beiden Schalenteile (103, 203) entlang der Trennlinie (403) mittels eines Reißverschlusses miteinander verbindbar sind, der mindestens einen Griff und mindestens einen Schieber umfasst, wobei der Reißverschluss so vorgesehen ist, dass im geschlossenen Zustand der Griff und der Schieber so vorgesehen sind, dass sie in der Nähe des freien Endes (8) der Verriegelungsvorrichtung angeordnet sind, die in der Eingriffsstellung zusammen mit einem Teil der Schale einen geschlossenen Bereich definiert, um den Zugang und die Betätigung des Griffs und des Schiebers durch eine Bedienungsperson zu schützen.

14. Vorrichtung nach einem oder mehreren der vorhergehenden Ansprüche, **dadurch gekennzeichnet, dass** das Kupplungselement (5) eine Kupplungsplatte (205) umfasst, die einen oder mehrere Kupplungszähne (105) aufweist, die von ihrem vorderen Profil in Bezug auf den Eingriffshub in dem Verriegelungselement (4) vorstehen, wobei die Eingriffsplatte (205) ferner eine, vorzugsweise zwei oder alternativ mehr als zwei Nuten (305) in der Nähe ihres hinteren Profils in Bezug auf den Eingriffshub in dem Verriegelungselement (4) aufweist, und wobei die Eingriffsplatte (205) an der Wand eines der beiden Schalenteile (103) befestigbar ist.

15. Vorrichtung nach einem oder mehreren der vorhergehenden Ansprüche, **dadurch gekennzeichnet, dass** das Verriegelungselement (4) eine Verriegelungsplatte (204) umfasst, die die obere Platte (1104) und die vertikalen Halterungen im vorderen Bereich in Bezug auf den Eingriffshub durch das Kopplungselement (5) aufnimmt, wobei die Platte (204) ferner an ihrem hinteren Ende mit dem Schwenkhebel (7) verbunden ist, der schwenkbar um eine quer zum Eingriffshub verlaufende Schwenkachse angebracht ist, wobei die Verriegelungsplatte mit Verankerungselementen am Rahmen (404) des Zweiradfahrzeugs versehen ist.

16. Vorrichtung nach einem oder mehreren der vorhergehenden Ansprüche, **dadurch gekennzeichnet, dass** sie eine Rahmenanpassungsvorrichtung (6) umfasst, die dazu bestimmt ist, auf einstellbare und abnehmbare Weise an einem oder mehreren Teilen des Rahmens des Zweiradfahrzeugs befestigt zu werden, und die einen Stützbereich (106) und einen oder mehrere Stütz- und/oder Verankerungsbereiche (206) für die in dem Verriegelungselement (4) ausgebildeten Verankerungselemente (404) umfasst.

17. Vorrichtung nach Anspruch 16, wobei die Rahmenanpassungsvorrichtung mindestens ein oder mehrere manuell einstellbare Gelenke (306) umfasst, um den Stützbereich um eine oder mehrere Schwenkachsen zu schwenken und/oder entlang einer oder mehrerer Verschiebeachsen in Übereinstimmung mit der gewünschten Ausrichtung des Koffers in der Eingriffsposition zu verschieben.

18. Vorrichtung nach Anspruch 16 oder 17, wobei die Rahmenanpassungsvorrichtung (6) mit einem oder mehreren der Verriegelungselemente (4), vorzugsweise aber nicht einschränkend mit der Verriegelungsplatte (204), einstückig ausgebildet ist.

19. Vorrichtung nach einem oder mehreren der vorhergehenden Ansprüche 16 bis 18, wobei die Anpassungsvorrichtung (6) einen oder mehrere Klemmkörper (406) zum Festklemmen an zylindrischen Teilen des Rahmens (2) des Zweiradfahrzeugs (1) umfasst.

## Revendications

1. Dispositif de confinement d'objets (3) pour véhicules à deux roues enfourchés tels qu'un vélo, une moto, comprenant:
- un coffre comprenant une coque tridimensionnelle réalisée de préférence au moins partiellement en au moins un matériau souple et flexible fermé sur lui-même, qui délimite un compartiment de logement et est formée de deux parties (103, 203) de coque se complétant mutuellement entre elles pour former ladite coque tridimensionnelle, dans lequel lesdites au moins deux parties de coque sont séparées l'une de l'autre par une ligne de séparation (403) s'étendant d'une extrémité à l'autre d'une section d'articulation réciproque (603) desdites deux parties de coque, de sorte à ce que lesdites deux parties (103, 203) de coque puissent être éloignées l'une de l'autre et rapprochées l'une de l'autre respectivement dans une position ouverte de ladite coque tridimensionnelle ou dans une position fermée de ladite coque tridimensionnelle, et des moyens étant fournis pour retenir de manière amovible lesdites deux parties de coque l'une à l'autre dans ladite position fermée de ladite coque tridimensionnelle,
- des moyens de fixation amovibles pour fixer ladite coque tridimensionnelle à une partie de structure (2) d'un véhicule à deux roues enfourché, dans lequel lesdits moyens comprennent un élément d'enclenchement (4) destiné à être fixé de manière permanente à ladite partie de structure (2) d'un véhicule à deux roues enfourché et un élément de couplage (5) qui est lié à l'une desdites deux parties (103, 203) de coque et qui peut être engagé avec et désengagé dudit élément d'enclenchement (4) par un mouvement relatif le long d'une course d'engagement/de désengagement selon un parcours prédéterminé, un second élément de verrouillage étant fourni pour verrouiller ledit élément de couplage (5) avec ledit élément d'enclenchement (4) dans une position d'engagement, ledit second élément de verrouillage comprenant une levier oscillant (7) monté oscillant sur l'élément d'enclenchement (4) et oscillant autour d'un axe d'oscillation orienté transversalement à la direction de ladite course d'engagement/de désengagement, ledit levier oscillant (7) étant situé en correspondance ou à proximité de l'extrémité postérieure dudit élément d'enclenchement (4) par rapport à la direction de la course d'engagement dudit élément de couplage (5) dans ledit élément d'enclenchement (4), ledit levier oscillant (7) étant mobile angulairement, ou bien
- dans une position de non-interférence avec la coque tridimensionnelle (103, 203) lorsqu'il est engagé avec l'élément d'enclenchement (4), de sorte que ledit élément de couplage (5) et, donc, ladite coque (103, 203) sont mobiles ensemble sur l'élément d'enclenchement (4) le long de la course d'engagement/de désengagement ou
- dans une position d'interférence avec la coque tridimensionnelle (103, 203), où le levier oscillant (7) est incliné vers le haut contre le côté postérieur de ladite coque tridimensionnelle, où, dans ladite position d'interférence, ledit levier oscillant (7) constitue un arrêt au mouvement libre de ladite coque tridimensionnelle et, par conséquent, dudit élément de couplage (5) dans la direction de désengagement dudit élément d'enclenchement (4),
dans lequel l'élément de couplage (5), solidaire de l'une des deux parties de coque (103, 203), comprend au moins un autre second élément de couplage (105), de préférence deux ou éventuellement plus de deux autres seconds éléments de couplage (105) distribués selon une conception prédéterminée le long d'un axe essentiellement transversal à la direction de la course d'engagement/de désengagement, positionnés dans la partie antérieure de l'élément de couplage (5), tandis que l'élément d'enclenchement (4) est pourvu d'un siège d'enclenchement (104) adapté pour coopérer avec lesdits autres seconds éléments de couplage (105) et positionné dans la partie antérieure de l'élément d'enclenchement (4), ledit siège d'enclenchement (104) étant engagé et désengagé par lesdits autres éléments de couplage (105) au moyen d'une translation dans un plan essentiellement horizontal ou légèrement incliné,
**caractérisé en ce que**
lorsque le levier oscillant (7) est dans ladite position d'interférence avec ladite coque tridimensionnelle (103, 203), qui est installée sur l'élément d'enclenchement (4), le levier oscillant (7) s'étend pour se chevaucher au moins partiellement et pour s'engager et se verrouiller avec la partie de ladite coque (103, 203) qui n'est pas directement connectée avec ledit élément de couplage (5).

2. Dispositif selon la revendication 1, dans lequel ledit siège d'enclenchement (104) est fourni avec des moyens de fin de course (304) coopérant avec lesdits éléments de couplage (105) pour arrêter la course d'engagement et lier l'élément d'engagement à l'élément d'enclenchement dans une position verrouillée, dans lequel sont empêchés les mouvements autres que le mouvement de la course de désengagement.

3. Dispositif selon la revendication 1 ou 2, dans lequel l'élément d'enclenchement (4) et l'élément de couplage (5) sont pourvus de moyens de guidage (604) coopérants dans une position de centrage mutuel et de coulissement relatif dans ladite direction d'engagement/de désengagement entre l'élément d'enclenchement (4) et l'élément de couplage (5).

4. Dispositif selon l'une ou plusieurs des revendications précédentes, dans lequel les autres seconds éléments de couplage comprennent au moins une dent d'engagement disposée dans un plan horizontal ou légèrement incliné et orienté dans la direction de la course d'engagement, tandis que le siège d'engagement (104) comprend au moins une plaque supérieure allongée (1104) disposée transversalement à la direction de la course d'engagement/de désengagement et présentant deux bords périphériques longs et deux bords périphériques courts, ladite plaque (1104) étant supportée en correspondance de ses bords périphériques courts par deux supports verticaux (2104) coopérants avec ladite dent ou lesdites dents d'engagement pour empêcher le mouvement transversal dudit élément de couplage (5) lorsqu'il est dans la position d'engagement avec ledit élément d'enclenchement (4).

5. Dispositif selon l'une ou plusieurs des revendications précédentes, dans lequel lesdits autres seconds éléments de couplage pour verrouiller l'élément de couplage (5) avec l'élément d'enclenchement (4) comprennent d'autres éléments de verrouillage entraînés (307) agissant dans ladite direction inclinée vers le haut de l'élément de verrouillage et s'activant et se désactivant simultanément avec le même, agissant dans la direction de la course d'engagement et coopérant avec des rainures (305) correspondantes découpées dans l'élément de couplage (5) de sorte à exercer une force de prise calibrée et prédéterminée sur ledit élément de couplage (5) dans la position d'engagement avec l'élément d'enclenchement (4), empêchant au moins la translation longitudinale et transversale dudit élément de couplage (5) par rapport audit élément d'enclenchement (4).

6. Dispositif selon l'une ou plusieurs des revendications précédentes, dans lequel ledit levier oscillant (7) comprend un mécanisme de commande de mouvement oscillatoire, de préférence sous la forme d'un mécanisme d'amortissement de vitesse angulaire au moyen d'au moins un ralentisseur de mouvement (407) positionné à proximité dudit axe d'oscillation autour duquel ledit levier oscillant (7) oscille, ledit mécanisme de commande de mouvement oscillatoire comprenant éventuellement un autre élément d'activation élastique (507) dudit mouvement oscillatoire.

7. Dispositif selon l'une ou plusieurs des revendications précédentes, **caractérisé en ce que** les moyens de verrouillage sont activés ou désactivés par un mécanisme d'activation/de désactivation (8, 9) comprenant une serrure à clé (18) destinée à coopérer avec un siège de verrouillage (39).

8. Dispositif selon la revendication 7, dans lequel ledit mécanisme d'activation/de désactivation (8, 9) comprend des moyens de retenue (408, 509) pour retenir ledit élément de verrouillage dans la position d'interférence contre le côté postérieur de la coque tridimensionnelle, lesquels moyens de retenue (408, 409) peuvent fonctionner dans la position d'activation et/ou de désactivation au moyen d'un mécanisme à pression (208) dont le fonctionnement est contraint par ladite serrure à clé (18).

9. Dispositif selon l'une ou plusieurs des revendications précédentes, **caractérisé en ce qu'**au moins une partie de la coque (203) qui ne porte pas l'élément de couplage (5) et le levier oscillant accueille ledit mécanisme d'activation/de désactivation (8, 9).

10. Dispositif selon l'une ou plusieurs des revendications de 7 à 9, dans lequel ledit mécanisme (8, 9) (d'activation/de désactivation) est maintenu dans la position d'engagement par un ou plusieurs éléments élastiques (108) commandés par un mécanisme à pression (208) pour le déverrouillage dudit mécanisme d'activation/de désactivation (8, 9) dans la position d'engagement.

11. Dispositif selon l'une ou plusieurs des revendications précédentes de 7 à 10, dans lequel le mécanisme d'activation/de désactivation (8, 9) comprend une tige (308), de préférence de forme cylindrique, disposée sur le levier oscillant (7) et orientée le long d'une direction essentiellement tangentielle au parcours oscillatoire dudit levier oscillant (7) autour dudit axe d'oscillation, ladite tige (308) étant destinée à être accueillie par un corps à fente (309) positionné sur une demi-coque (203) dudit coffre dans un plan orthogonal à ladite tige lorsque se produit la condition d'engagement dudit mécanisme d'activation/de désactivation (8, 9), ledit corps à fente (309) comprenant une ouverture de couplage (409) présentant une forme et une dimension essentiellement égales à la forme de section cylindrique de ladite tige (308), de sorte à accueillir ladite tige (308).

12. Dispositif selon l'une ou plusieurs des revendications précédentes de 7 à 11, dans lequel le mécanisme d'activation/de désactivation (8, 9) comprend un élément d'accrochage (708) disposé sur le levier oscillant (7) et fourni pour être engagé dans un siège d'engagement correspondant disposé sur la demi-coque (203) supérieure du coffre, ledit élément d'accrochage (708) coopérant avec un appendice (1508) de l'élément d'activation/de désactivation pour la translation d'au moins un desdits éléments de maintien (308) en position.

13. Dispositif selon l'une ou plusieurs des revendications précédentes, dans lequel les deux parties de coque (103, 203) peuvent être connectées entre elles le long de la ligne de séparation (403) au moyen d'une fermeture éclair comprenant au moins une languette et au moins un curseur, ladite fermeture éclair étant fournie de sorte à ce que, dans la condition fermée, ladite languette et ledit curseur sont fourni pour être placés à proximité de l'extrémité libre (8) du dispositif de verrouillage, qui, dans la position d'engagement, définit avec une portion de la coque une zone fermée pour protéger l'accès et l'actionnement de ladite languette et dudit curseur par un opérateur.

14. Dispositif selon l'une ou plusieurs des revendications précédentes, **caractérisé en ce que** l'élément de couplage (5) comprend une plaque de couplage (205) ayant l'une ou plusieurs des dents de couplage (105) faisant saillie de son profil avant par rapport à la course d'engagement dans ledit élément d'enclenchement (4), laquelle plaque d'engagement (205) présente en outre un, de préférence deux ou alternativement plus de deux rainures (305) à proximité de son profil postérieur par rapport à la course d'engagement dans ledit élément d'enclenchement (4), et laquelle plaque d'engagement (205) peut être fixée à la paroi de l'une desdites deux parties de coque (103).

15. Dispositif selon l'une ou plusieurs des revendications précédentes, **caractérisé en ce que** ledit élément d'enclenchement (4) comprend une plaque d'enclenchement (204) logeant ladite plaque supérieure (1104) et lesdits supports verticaux dans la zone antérieure par rapport à la course d'engagement dudit élément de couplage (5), ladite plaque (204) étant en outre connectée, à son extrémité postérieure, avec ledit levier oscillant (7) qui est monté articulé de manière oscillante autour d'un axe d'oscillation transversal à la course d'engagement, ladite plaque de verrouillage étant fournie avec des éléments d'ancrage pour être ancrée au châssis (404) dudit véhicule à deux roues.

16. Dispositif selon l'une ou plusieurs des revendications précédentes, **caractérisé en ce qu'**il comprend un dispositif (6) d'adaptation au châssis destiné à être fixé de manière réglable et amovible à une ou plusieurs parties du châssis dudit véhicule à deux roues et comprenant une zone de support (106) et un ou plusieurs zones de supports et/ou d'encrage (206) auxdits élément d'encrage (404) constitués dans ledit élément d'enclenchement (4).

17. Dispositif selon la revendication 16, dans lequel ledit dispositif d' adaptation au châssis comprend au moins une ou une pluralité d'articulations (306) réglables manuellement pour faire osciller la zone de support autour d'un ou plusieurs axes d'oscillation et/ou pour translater le long d'un ou plusieurs axes de translation conformément à l'orientation désirée du coffre lorsque dans la position d'engagement.

18. Dispositif selon les revendications 16 ou 17, dans lequel ledit dispositif d'adaptation au châssis (6) est réalisé en une pièce avec un ou plusieurs des éléments d'enclenchement (4), de préférence et sans limitations avec ladite plaque d'enclenchement (204).

19. Dispositif selon l'une ou plusieurs des revendications précédentes de 16 à 18, dans lequel ledit dispositif d'adaptation (6) comprend un ou plusieurs corps de serrage (406) pour le serrage sur des parties cylindriques du châssis (2) dudit véhicule à deux roues (1).
